# EUROPÄISCHE PATENTSCHRIFT

(11) **EP 0 520 149 B1**
(45) Veröffentlichungstag und Bekanntmachung des Hinweises auf die Patenterteilung: **28.12.1994**
(21) Anmeldenummer: 92105873.1
(22) Anmeldetag: 04.04.1992
(51) Int. Cl.: B62D 1/06

(54) **Aufsatzteil für ein Fahrzeug-Lenkrad**
Cap-part for a steering wheel of a motor vehicle
Pièce à poser sur un volant de véhicule

(30) Priorität: 22.06.1991 DE 4120647
(43) Veröffentlichungstag der Anmeldung: 30.12.1992
(73) Patentinhaber: Eissmann, Volkhard, D-72574 Bad Urach (DE); Eissmann, Jürgen, D-72574 Bad Urach (DE)
(72) Erfinder: Eissmann,Volkhard, W-7432 Bad Urach-Seeburg (DE)
(74) Vertreter: Abel, Martin, Dipl.-Ing.

(56) Entgegenhaltungen:
- DE-A- 2 716 449
- US-A- 1 876 993
- US-A- 2 491 803
- US-A- 4 800 776
- US-A- 5 042 318

## Beschreibung

Die Erfindung betrifft ein Aufsatzteil zum lösbaren Anbringen am von der Fahrerhand umgreifbaren Lenkradkranz eines gebrauchsfertigen Fahrzeug-Lenkrades, wobei das Aufsatzteil den Lenkradkranz im daran angebrachten Zustand zumindest teilweise in Umgreifrichtung umgibt und von einem mindestens etwa handbreitlangen, mit einer das Aufsetzen auf den Lenkradkranz ermöglichenden Montagetrennstelle versehenen manschettenartigen Greifteil gebildet ist, das sich im am Lenkradkranz angebrachten Zustand nur über einen Teil des Kranzumfanges erstreckt und sich an beliebiger Stelle des Kranzumfanges einhändig ergreifbar anbringen läßt, wozu es im Bereich der Montagetrennstelle eine dem lösbaren Zusammenhalt dienende Verbindungseinrichtung aufweist.

Der Lenkradkranz von Fahrzeug-Lenkrädern besteht im Bereich der Außenoberfläche in den häufigsten Fällen aus Kunststoffmaterial. Dies führt im Falle starker Sonneneinstrahlung zu einer extremen Aufheizung, was ein Anfassen mit der bloßen Hand unmöglich, zumindest jedoch unangenehm macht. Handschweiß wird von diesem Material ebenfalls nicht aufgenommen. Eine gewisse Linderung dieser Probleme hat die Verwendung von sogenannten Lederlenkrädern zur Folge, ohne daß dabei jedoch ein zufriedenstellendes Ergebnis erzielt wird. Lenkräder dieser Art sind überdies relativ teuer.

Es wurde daher in der US-A-1,876,993 bereits ein Aufsatzteil der eingangs genannten Art vorgeschlagen, das ohne großen Aufwand den Fahrkomfort verbessert. Es deckt die von einer Hand zu ergreifende Stelle des Lenkradkranzes ab und übt eine isolierende, meist schweißabsorbierende Wirkung aus. Im Gegensatz zu den Lenkradkranz vollständig abdeckenden ringförmigen Umhüllungen, wie sie z.B. in der DE-A 27 16 449, der US-A-4,800,776 und der US-A-2,491,803 beschrieben werden, ist seine Verwendung zudem vom Durchmesser des Lenkradkranzes unabhängig, wodurch bei geringerem Materialverbrauch ein universeller Einsatz möglich ist.

Dennoch wartet das Aufsatzteil gemäß US-A-1,876,993 mit einigen Problempunkten auf. Zunächst läßt es sich während der Montage am Lenkradkranz nur mit Mühe an der gewünschten Position fixieren, da die Struktur insgesamt sehr instabil ist und man somit alle Hände voll zu tun hat, um das Aufsatzteil während des Montagevorganges einerseits zu halten und andererseits die Verschlußteile der Verbindungseinrichtung zu betätigen. Selbst im Falle des Vorhandenseins einer komfortableren Verbindungseinrichtung wäre es beispielsweise während der Fahrt unmöglich, eine gefahrlose Umpositionierung des Aufsatzteiles am Lenkradkranz vorzunehmen. Um die Verbindungseinrichtung überhaupt handhaben zu können, muß das Greifteil während der Montage fortwährend glattgestrichen werden. Trotz dieser Maßnahme wird sich allerdings beim montierten Aufsatzteil infolge der Krümmung des Lenkradkranzes eine Faltenbildung nicht vermeiden lassen. Anfällig hierfür sind vor allem die der Lenkradnabe zugewandten Innenbereiche des Aufsatzteiles. Falten beeinträchtigen jedoch den Greifkomfort, behindern das Gleitenlassen des Lenkradkranzes durch die Hand bei einem Rücklenkvorgang, und sie bilden Zwischenräume, in denen sich Schmutz absetzen kann.

Es ist daher die Aufgabe der Erfindung, ein Aufsatzteil gemäß der eingangs genannten Art zu schaffen, das sich einfach, rasch und ohne nennenswerte Faltenbildung montieren läßt.

Diese Aufgabe wird dadurch gelöst, daß das Greifteil im unmontierten Zustand vor dem Anbringen am Lenkradkranz eine durch Vorformgebung festgelegte kappen- oder haubenähnliche Gestalt aufweist und einen muldenartigen Innenraum begrenzt, in den der Lenkradkranz im an diesen angebrachten Zustand eintaucht, wobei der Bereich der Kappen- bzw. Haubenöffnung die Montagetrennstelle bildet.

Auf diese Weise läßt sich das Aufsatz- bzw. Greifteil bei der Montage mit der Greifseite voraus in einer Hand halten und in dieser Stellung mit der Haubenöffnung voraus an beliebiger Stelle des Lenkradkranzes ansetzen. Die Montage ist also nur noch das Werk eines Augenblickes, so daß sie auch während der Fahrt eines Fahrzeuges gefahrlos vorgenommen werden kann, falls der Fahrer eine andere Greifposition einer Hand wünscht. Infolge der kappen- oder haubenähnlichen Vorformgebung liegt eine trotz flexibler Eigenschaften stabile Struktur vor, die sich einfach handhaben läßt. Bereits beim Ansetzen des Greifteiles taucht der Lenkradkranz ganz oder teilweise in den muldenartigen Innenraum ein, so daß die im Bereich der Montagetrennstelle angeordneten Bestandteile der Verbindungseinrichtung ihrer gewünschten Endposition schon sehr nahe kommen und die noch erforderliche weitere Handhabung auf einfachste Weise vorgenommen werden kann.

Vorteilhafte Weiterbildungen der Erfindung gehen aus den Unteransprüchen hervor.

Die kappen- oder haubenähnliche Montagegestalt läßt sich dadurch vorgeben, daß man als Ausgangsprodukt einen im wesentlichen länglich-ovale Kontur aufweisenden nachgiebigen Flachkörper verwendet, der durch randseitige Bearbeitung in die entsprechende Form gezwungen wird. Im montierten Zustand des Greifteiles ist dadurch keinerlei Faltenbildung festzustellen und der Greifkomfort ist überaus hoch. Die randseitige Bearbeitungsmaßnahme ist zweckmäßigerweise randseitig umlaufend. Von Vorteil ist es, wenn als Bearbeitungsmaßnahme eine die entsprechenden Randbereiche übergreifendes, mit diesen fest verbundenes Einfaßband vorgesehen ist, das insbesondere eine im Querschnitt U-förmige Gestalt aufweist, wobei die Randbereiche in der U-Ausnehmung aufgenommen sind. Ein guter Halt des Einfaßbandes ergibt sich, wenn es mit den Randbereichen des Aufsatzteiles vernäht ist. Seine Länge ist zweckmäßigerweise geringer als der ursprüngliche randseitige Umfang des Flachkörpers, um auf einfache Weise die Formgebung zu erzwingen. Es ist auch möglich, als Bearbeitungsmaßnahme eine Vernähung der Randbereiche vorzunehmen.

Bei einer weiteren zweckmäßigen Ausführungsform besteht das vorgeformte Greifteil aus formstabilem, jedoch biegbarem oder flexiblem Material. Es kann sich um einen vorgeformten Kunststoffkörper handeln.

Bevorzugt weist die Verbindungseinrichtung ein am einen trennstellenseitigen Randbereich des Aufsatzteiles angeordnetes Verbindungsteil auf, das mit dem gegenüberliegenden zweiten Randbereich des Greifteils oder einem daran angeordneten weiteren Verbindungsteil verbindend zusammenarbeiten kann. Die beispielsweise als sogenannte Klettverbindungseinrichtung ausgeführte Verbindungseinrichtung bewirkt, daß das Aufsatzteil im montierten Zustand ringförmig in Umgreifrichtung des Lenkradkranzes geschlossen ist und beispielsweise eine hülsenartige Gestalt einnimmt, wobei zweckmäßigerweise eine an den Durchmesser des Lenkradkranzes angepaßte Krümmung vorliegt.

Um die Montage noch weiter zu erleichtern, kann im Bereich von mindestens einem der beiden trennstellenseitigen Randbereiche des Aufsatzteils eine am Lenkradkranz haftend festlegbare Halteeinrichtung als Montagehilfe vorgesehen sein. Es kann sich hierbei zum Beispiel um ein nachträglich problemlos wieder entfernbares selbsthaftendes und beispielsweise bandförmiges Haft- oder Klebeelement handeln. Überdies können an der Greifteil-Innenseite Mittel zur Verhinderung eines Verrutschen des Greifteils gegenüber dem Lenkradkranz vorgesehen sein.

Um den Greifkomfort des Aufsatzteils besonders gut zur Geltung bringen zu können, weist das Greifteil zweckmäßigerweise einen Mehrschichtaufbau auf, wobei die vorhandenen Material schichten insbesondere unterschiedliche Materialeigenschaften aufweisen, die jeweils einem besonderen Zweck dienen können, beispielsweise der Isolierung, Aufpolsterung, Schweißaufnahme und/oder Rutschhemmung.

Nachfolgend wird die Erfindung anhand der in der beigefügten Zeichnung dargestellten Ausführungsbeispiele näher erläutert. In der Zeichnung zeigen im einzelnen:
- Figur 1: eine erste Bauform des erfindungsgemäßen Aufsatz- bzw. Greifteils in perspektivischer Darstellung mit Blick auf die im montierten Zustand umgreifbare Oberfläche, im unmontierten Zustand,
- Figur 2: einen Längsschnitt durch das Ausführungsbeispiel der Figur 1 gemäß Schnittlinie II-II,
- Figur 3: einen Querschnitt gemäß Schnittlinie III-III durch das Ausführungsbeispiel der Figur 1, wobei ein alternativer Aufbau gezeigt ist,
- Figur 4: das Aufsatz- bzw. Greifteil der Figuren 1 bis 3 im an einem strichpunktiert angedeuteten Lenkradkranz montierten Zustand im Querschnitt entsprechend Schnittlinie III-III,
- Figur 5: die perspektivische Darstellung eines an einem Lenkradkranz mit der Montagetrennstelle zur Lenkradnabe weisend angebrachten Aufsatz- bzw. Greifteil, wobei der Lenkradkranz strichpunktiert mit einem Abschnitt seines Umfanges angedeutet ist, und
- Figur 6: ein Fahrzeuglenkrad mit zwei am Lenkradkranz in Umfangsrichtung beabstandet zueinander montierten Aufsatz- bzw. Greifteilen.

In Figur 6 ist schematisch ein Fahrzeug-Lenkrad 1 mit Blickrichtung entlang der Drehachse 2 dargestellt. Es besitzt einen sich bezüglich der Drehachse 2 in Umfangsrichtung 3 erstreckenden Lenkradkranz 4. Dieser läßt sich von einer Hand des Fahrzeuglenkers umgreifen, die Umgreifrichtung ist mit Doppelpfeil 5 verdeutlicht. Denkt man sich den Lenkradkranz 4 an einer Stelle quer durchtrennt, so fällt die Umgreifrichtung 5 bei Blickrichtung auf den Querschnitt mit dessen Umfangsrichtung zusammen.

Der Lenkradkranz 4 ist gebrauchsfertig, so wie er in einem Fahrzeug üblicherweise zum Einsatz kommt. Um unabhängig von der Temperatur und eventueller Handschweißentwicklung eine optimale Handhabbarkeit zu gewährleisten, sind am Lenkradkranz 4 mehrere Greifteile 6 in Umfangsrichtung 3 beabstandet angeordnet, bei denen es sich um aufgesetzte Zusatzteile handelt. Vorliegend kommen zwei solcher Greifteile 6 zum Einsatz, die Anzahl ist jedoch beliebig.

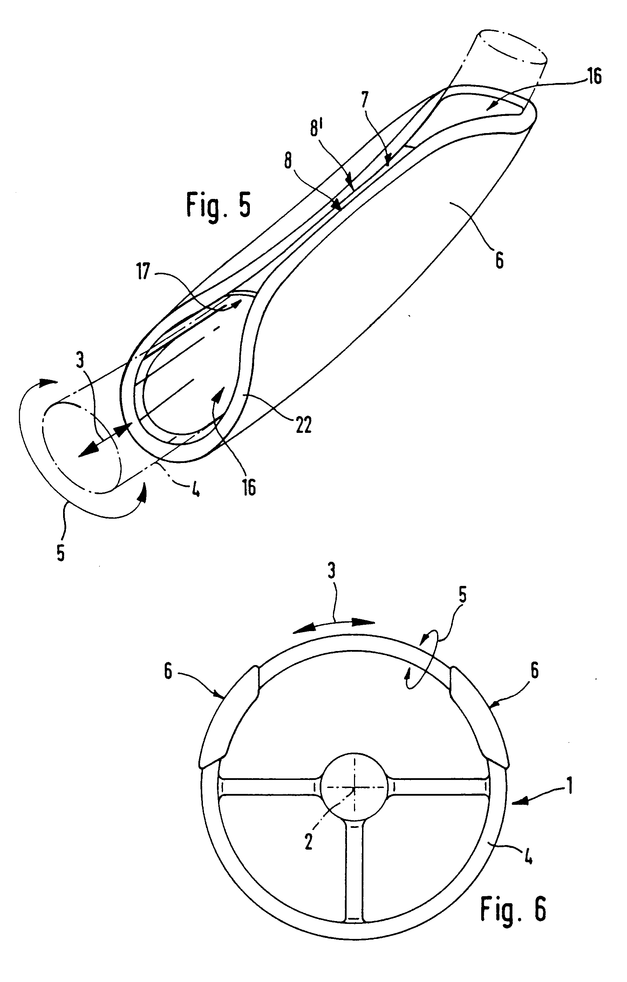

Wie auch aus Figur 5 hervorgeht, läßt sich ein jeweiliges Greifteil 6 an beliebiger Stelle des Kranzumfanges anbringen, wobei es den Lenkradkranz 4 im montierten Zustand zumindest teilweise in Umgreifrichtung 5 umschließt. Seine in Umfangsrichtung 3 gemessene Länge ist geringer als die entsprechend gemessene Umfangslänge des Lenkradkranzes 4, so daß im montierten Zustand in Umfangsrichtung 3 beidseits neben ihm unabgedeckte Lenkradkranzbereiche vorliegen. Bevorzugt ist die Greifteillänge auf die Breite einer menschlichen Hand abgestimmt, so daß sich das montierte Greifteil einhändig umgreifen läßt, ohne daß unabgedeckte Lenkradkranzbereiche mit der Hand in Berührkontakt gelangen.

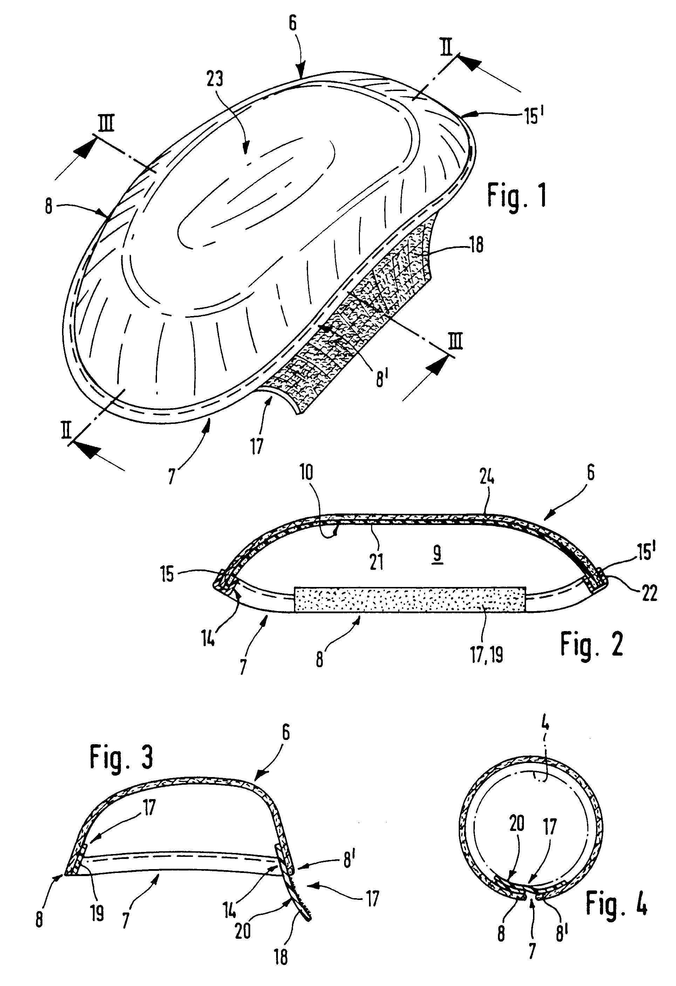

Im montierten Zustand wird der Lenkradkranz 4 manschettenartig vom Greifteil 6 umgriffen, das deshalb auch als Greifmanschette bezeichnet werden könnte. Um die Montage zu ermöglichen, verfügt das Greifteil 6 über eine entlang seiner gesamten Länge durchgehende Montagetrennstelle 7, die im montierten Zustand mehr oder weniger weit geschlossen ist. Dies ist vor allem aus den Figuren 4 und 5 ersichtlich. Im vom Lenkradkranz 4 abgenommenen Zustand klaffen die die Montagetrennstelle 7 längsseits flankierenden Randbereiche 8, 8' des Greifteils 6 normalerweise weiter auseinander, wie dies aus den ein unmontiertes Greifteil 6 zeigenden Figuren 1 bis 3 hervorgeht.

Das Greifteil 6 gemäß Ausführungsbeispiel besitzt, im unmontierten Zustand gesehen, eine kappen- oder haubenähnliche Gestalt, wie dies in den Figuren 1 bis 3 zum Ausdruck kommt. Diese Gestalt ist zweckmäßigerweise durch Vorformgebung festgelegt. Der Bereich der Kappen- bzw. Haubenöffnung 14 stellt die Montage-Trennstelle 7 dar, mit der voraus das Greifteil 6 bei der Montage insbesondere von radial außen her an den Lenkradkranz 4 angesetzt wird. Infolge der Krümmung des Lenkradkranzes 4 taucht dieser dabei zumindest teilweise in den muldenartigen Innenraum 9 des Greifteils 6 ein und wird von den beiden Randbereichen 8, 8' umgriffen, so daß die Montagetrennstelle auf der der Lenkradnabe zugewandten Innenseite des Lenkradkranzes 4 zu liegen kommt. Aufgrund der vorzugsweise nachgiebigen oder flexiblen bzw. elastischen Ausgestaltung des Greifteils 6 können dabei die Randbereiche 8, 8' unter Verringerung der Breite der Montagetrennstelle 7 aufeinander zu gebogen werden, wobei sich gleichzeitig die Innenoberfläche 10 des Greifteils 6 an die Außenoberfläche des Lenkradkranzes 4 anschmiegt.

Im unmontierten Zustand ist die die Montagetrennstelle 7 bildende Haubenöffnung 14 zweckmäßigerweise im wesentlichen oval konturiert. Entsprechend ergibt sich für das Greifteil 6 bei Draufsicht auf die äußere Greifseite eine ebenfalls im wesentlichen ovale Konturierung.

Die Randbereiche 8, 8' bilden die längsseitige Begrenzung der Haubenöffnung 14. Die schmalseitigen Randbereiche 15, 15' sind im montierten Zustand in Umfangsrichtung 3 ausgerichtet. Da sie einen gegenüber den Randbereichen 8, 8' etwas zurückgesetzten Verlauf besitzen, stellen sich bei geschlossener Montagetrennstelle 7 längsseits am Greifteil 6 Öffnungen 16 ein, die vom Lenkradkranz 4 durchzogen werden.

Das Greifteil 6 gemäß Ausführungsbeispiel läßt sich lösbar am Lenkradkranz 4 eines beliebigen Lenkrades anbringen. Dadurch ist zum Beispiel zum Reinigen oder Waschen ein Abnehmen möglich. Auch läßt sich dadurch die Umfangsposition am Lenkradkranz 4 beliebig variieren oder ein Umsetzen zwischen verschiedenen Lenkrädern vornehmen.

Damit ein sicherer Halt gewährleistet werden kann, weist das Greifteil 6 im Bereich seiner Montagetrennstelle 7 bzw. im Bereich der Haubenöffnung 14 eine dem lösbaren Zusammenhalt der beiden Randbereiche 8, 8' dienende Verbindungseinrichtung 17 auf. Bei ihr handelt es zum Beispiel um eine Druckknopf-, Reißverschluß- oder Klebe- bzw. Selbstklebe-Verbindungseinrichtung. Beim Ausführungsbeispiel ist eine sogenannte Klettverbindungseinrichtung vorgesehen, deren Verbindungsprinzip auf dem lösbaren Verhaken einer Vielzahl von hakenartigen Gliedern beruht.

Die Verbindungseinrichtung 17 des Ausführungsbeispiels besitzt ein am einen trennstellenseitigen Randbereich 8' des Greifteils 6 angebrachtes Verbindungsteil 18, das nach Art einer flexiblen Lasche ausgebildet ist, welche vom Innenraum weg über den Randbereich 8 nach außen vorsteht. Ein zweites Verbindungsteil 19, das in der Lage ist, mit dem ersten Verbindungsteil 18 eine lösbare Verbindung einzugehen, ist am gegenüberliegenden Randbereich 8 angeordnet, und befindet sich zweckmäßigerweise zumindest teilweise im Innenraum 9. Beide Verbindungsteile 18, 19 sind zum Beispiel bandförmig ausgestaltet und erstrecken sich in Längsrichtung des zugeordneten Randbereiches 8, 8'.

Bei der Montage werden nun die beiden Randbereiche 8, 8' in Umgreifrichtung 5 unter Verringerung der Breite der Montagetrennstelle 7 einander angenähert, wobei zugleich die Verbindungsteile 18, 19 derart zur Überlappung gebracht werden, daß sie miteinander verbindbar sind. Dieser Zustand ist sehr gut aus Figur 4 ersichtlich, aus der man auch erkennt, daß die Montagetrennstelle 7 im montierten Zustand des Greifteils 6 über zumindest einen Teil ihrer Länge zumindest annähernd geschlossen sein kann, was dem Greifgefühl zugutekommt.

Um einen guten Sitz zu erzielen, sollte das Greifteil 6 manschettenartig um den Lenkradkranz herumgespannt sein. Bei der Montage ist daher ein Aufeinanderzuziehen der beiden Randbereiche 8, 8' ratsam. Um diesen Vorgang zu erleichtern, ist zweckmäßigerweise eine Montagehilfe vorgesehen, mit der sich das Greifteil 6 an einer Stelle des Lenkradkranzes 4 insbesondere lösbar fixieren läßt, um hernach ohne Verrutschneigung eine Zugkraft ausüben zu können. Beim Ausführungsbeispiel ist im Bereich eines der beiden trennstellenseitigen Randbereiche 8' des Greifteils 6 daher eine am Lenkradkranz 4 haftend festlegbare Halteeinrichtung 20 vorgesehen, die zum Beispiel aus selbstklebendem Material oder Klebeband besteht. Es bietet sich an, diese bei laschenartiger Ausgestaltung des einen Verbindungsteils 18 an dessen zur Verbindung mit dem zweiten Verbindungsteil nicht benötigter Flachseite vorzusehen. Während daher beim Ausführungsbeispiel das laschenartige Verbindungsteil 18 an der bei hergestellter Verbindung nach radial außen weisenden Seite mit Mitteln der Verbindungseinrichtung 17 ausgestattet ist, trägt es an der entgegengesetzten Seite die Halteeinrichtung 20, die an der Außenoberfläche des Lenkradkranzes 4 haftet.

Die als Montagehilfe vorgesehene Halteeinrichtung 20 gewährleistet gleichzeitig einen verrutschungssicheren Halt am Lenkradkranz 4. Zusätzlich oder alternativ können aber auch an der im montierten Zustand der Außenoberfläche des Lenkradkranzes 4 zugewandten Greifteil-Innenseite 10 Maßnahmen zur Verhinderung eines Verrutschens getroffen sein. Beim Ausführungsbeispiel gemäß Figur 2 ist dies der Fall, wo das Greifteil 6 an der Innenseite 10 eine Schicht 21 aus rutschhemmendem Material wie Schaum trägt.

Um die wünschenswerte kappen- bzw. haubenförmige Vorformgebung zu erhalten, kann das Tragteil insgesamt aus einem formstabilen, jedoch biegbaren oder flexiblen Material bestehen. Dies ist zum Beispiel beim in Figur 3 angedeuteten Ausführungsbeispiel der Fall, wo das Greifteil als vorgeformter Kunststoffkörper ausgebildet ist. Bevorzugt ist dieser Kunststoffkörper noch mit einer weiteren Materialschicht überzogen (nicht dargestellt), die saugfähig und/oder isolierend ist.

Das Greifteil gemäß Figuren 1 und 2 besteht aus flexiblem Material oder flexiblen Materialien, welche ursprünglich Flachgestalt mit im wesentlichen länglich-ovaler Kontur besitzen. Es kann sich hier z.B um Stoff oder Leder oder Fell handeln. Durch eine randseitig insbesondere umlaufend vorgenommene Bearbeitung wird dem Material jedoch die gewünschte hauben- bzw. kappenähnliche Formgebung aufgezwungen. Beim Ausführungsbeispiel ist als Bearbeitungsmaßnahme die Anbringung eines Einfaßbandes 22 vorgesehen, das den umlaufenden Rand des Greifteils 6 innen und außen übergreift. Es besitzt also im Querschnitt eine im wesentlichen U-förmige Gestaltung, wobei die Randbereiche des Greifteils 6 in der U-Ausnehmung aufgenommen sind. Es kann sich um ein Kunststoffband handeln und ist mit dem Greifteilrand fest verbunden, zum Beispiel durch Annähen. Die Länge des Einfaßbandes 22 ist geringer als der bei Flachgestalt gemessenen Umfang des Greifteils, so daß sich nach dem Befestigen automatisch die gewölbte Form einstellt.

Der gleiche Effekt könnte zum Beispiel auch durch Anbringen einer geeigneten Naht erzielt werden. Vorteilhaft ist allerdings, wenn der Randbereich, wie dies bei Verwendung eines Einfaßbandes 22 geschieht, durch die Bearbeitungsmaßnahme eine Verstärkung erfährt, so daß im montierten Zustand im Bereich der Öffnungen 16 ein sanfter, gleichmäßiger Übergang zwischen der die Greifseite bildenden Außenoberfläche 23 des Greifteils 6 und der Oberfläche des Lenkradkranzes 4 hergestellt wird, so daß im Gebrauchein Umstülpen ausgegschlossen ist.

Vorzugsweise besitzt das Greifteil 6 einen Mehrschichtaufbau. So ist beim Ausführungsbeispiel gemäß Figuren 1 und 2 eine äußere die Greiffläche bildende Außenschicht 24 vorgesehen, die aus Stoff oder Leder besteht. Als zweite Schicht ist hier die Schicht 21 aus rutschhemmendem Material vorgesehen, bei dem es sich zum Beispiel um Schaumstoff handelt, und das zweckmäßigerweise mit der angrenzenden Schicht 24 fest verbunden ist. Die Außenschicht 24 sollte aus saugfähigem Material bestehen und kann zugleich als Isolierschicht wirken, die im Bereich der Außenoberfläche 23 zu hohe oder zu niedrige Temperaturen verhindert. Auch kann eine separate Isolierschicht vorgesehen sein. Auch eine Schicht aus Fellmaterial kann Verwendung finden.

Vorzugsweise wird man den Aufbau des Greifteils 6 den jeweiligen Einsatzbedingungen anpassen. Von Vorteil ist jedoch in jedem Fall die Verwendung von etwa im Bereich zwischen -40° und +110 °C hitze- und formbeständigem Material.

Je nach Dicke des Greifteils läßt sich eine mehr oder weniger große Erhöhung des Lenkradkranz-Querschnittes im Umgreifbereich erzielen. Auf diese Weise läßt sich durch Verwendung der Greifteile 6 auch eine einfache Anpassung an die Größenverhältnisse der Fahrerhände vornehmen.

Da bei Verwendung der Greifteile 6 der Lenkradkranz 4 nur segmentweise abgedeckt ist, ergibt sich gegenüber einer Vollabdeckung eine erhebliche Materialeinsparung bei gleichzeitig universellem Einsatz. Die Greifteile 6 lassen sich auxh als Werbeträger verwenden.

Abschließend sei nochmals darauf verwiesen, daß ein wesentlicher Vorteil des Greifteils 6 darin besteht, daß es als Isolierteil verwendet werden kann, das die greifende Hand sowohl gegen zu hohe als auch gegen zu niedrige Temperaturen des Lenkradkranzes abschirmt. Zu diesem Zweck besteht das Greifteil zumindest teilweise und - zweckmäßigerweise abgesehen von eventuellen Verbindungseinrichtungen - insbesondere vollständig aus isolierendem Material.

Von Vorteil ist auch, wenn die Abmessungen des Greifteils auf den in Umgreifrichtung gemessenen Umfang des Lenkradkranzes derart abgestimmt sind, daß im Bereich der Montagetrennstelle im montierten Zustand kein oder praktisch kein Spalt entsteht, der das Greifgefühl beeinträchtigt. In diesem Zusammen ist es von Vorteil, wenn das Greifteil 6 - im montierten Zustand gesehen zumindest in Umgreifrichtung - elastisch dehnbar ist, so daß im Rahmen einer mehr oder weniger starken Dehnung bei der Montage eine Anpassung an den vorstehend erwähnten Lenkradkranz-Umfang vorgenommen werden kann. Hierbei besteht das Greifteil 6 zweckmäßigerweise ganz oder teilweise aus flexiblem und/oder elastischem Material bzw. Material mit gummielastischen Eigenschaften. Ein und dasselbe Greifteil läßt sich dadurch zum Beispiel für Lenkräder verwenden, deren Lenkradkranz - im Querschnitt gesehen - einen Umfang zwischen 25 und 36 mm aufweist. Im Zusammenhang mit einer Verbindungseinrichtung der oben beschriebenen Art läßt sich das Greifteil auch im stark gedehnten Zustand optimal fixieren.

## Patentansprüche

1. Aufsatzteil zum lösbaren Anbringen am von der Fahrerhand umgreifbaren Lenkradkranz (4) eines gebrauchsfertigen Fahrzeug-Lenkrades (1), wobei das Aufsatzteil den Lenkradkranz (4) im daran angebrachten Zustand zumindest teilweise in Umgreifrichtung (5) umgibt und von einem mindestens etwa handbreitlangen, mit einer das Aufsetzen auf den Lenkradkranz (4) ermöglichenden Montagetrennstelle (7) versehenen manschettenartigen Greifteil (6) gebildet ist, das sich im am Lenkradkranz (4) angebrachten Zustand nur über einen Teil des Kranzumfanges erstreckt und sich an beliebiger Stelle des Kranzumfanges (3) einhändig ergreifbar anbringen läßt, wozu es im Bereich der Montagetrennstelle (7) eine dem lösbaren Zusammenhalt dienende Verbindungseinrichtung (17) aufweist, dadurch gekennzeichnet, daß das Greifteil (6) im unmontierten Zustand vor dem Anbringen am Lenkradkranz (4) eine durch Vorformgebung festgelegte kappen- oder haubenähnliche Gestalt aufweist und einen muldenartigen Innenraum (9) begrenzt, in den der Lenkradkranz (3) im an diesen angebrachten Zustand eintaucht, wobei der Bereich der Kappen- bzw. Haubenöffnung (14) die Montagetrennstelle (7) bildet.

2. Aufsatzteil nach Anspruch 1, dadurch gekennzeichnet, daß das Greifteil (6) als ursprünglich im wesentlichen länglichovale Kontur aufweisender Flachkörper ausgebildet ist, dessen Randbereiche (8, 8', 15, 15') eine die vor der Montage vorliegende Hauben- bzw. Kappenform hervorrufende Bearbeitungsmaßnahme erfahren haben.

3. Aufsatzteil nach Anspruch 2, dadurch gekennzeichnet, daß es sich bei der die Hauben- bzw. Kappenform hervorrufenden Bearbeitungsmaßnahme um eine randseitig umlaufende Bearbeitungsmaßnahme handelt.

4. Aufsatzteil nach Anspruch 2 oder 3, dadurch gekennzeichnet, daß als die Hauben- bzw. Kappenform hervorrufende Bearbeitungsmaßnahme ein die Randbereiche (8, 8', 15, 15') übergreifendes, mit diesen fest verbundenes Einfaßband (22) vorgesehen ist.

5. Aufsatzteil nach Anspruch 4, dadurch gekennzeichnet, daß das Einfaßband (22) eine im Querschnitt U-förmige Gestalt besitzt, wobei die Randbereiche (8, 8', 15, 15') in der U-Ausnehmung aufgenommen sind und dadurch innen und außen übergriffen werden.

6. Aufsatzteil nach Anspruch 4 oder 5, dadurch gekennzeichnet, daß das Einfaßband (22) mit den Randbereichen (8, 8', 15, 15') vernäht ist.

7. Aufsatzteil nach einem der Ansprüche 4 bis 6, dadurch gekennzeichnet, daß die Länge des Einfaßbandes (22) geringer ist als der ursprüngliche randseitige Umfang des Flachkörpers.

8. Aufsatzteil nach Anspruch 2, dadurch gekennzeichnet, daß als die Hauben- bzw. Kappenform hervorrufende Bearbeitungsmaßnahme eine Vernähung der Randbereiche (8, 8', 15, 15') vorgesehen ist.

9. Aufsatzteil nach Anspruch 1, dadurch gekennzeichnet, daß das Greifteil (6) aus formstabilem, jedoch biegbarem oder flexiblem Material besteht.

10. Aufsatzteil nach Anspruch 1 oder 9, dadurch gekennzeichnet, daß das Greifteil (6) als vorgeformter Kunststoffkörper ausgebildet ist.

11. Aufsatzteil nach Anspruch 10, dadurch gekennzeichnet, daß der Kunststoffkörper mit einer saugfähigen und/oder isolierenden Materialschicht überzogen ist.

12. Aufsatzteil nach einem der Ansprüche 1 bis 11, dadurch gekennzeichnet, daß das Greifteil (6) im montierten Zustand eine an den Durchmesser des Lenkradkranzes (4) angepaßte Krümmung aufweist.

13. Aufsatzteil nach einem der Ansprüche 1 bis 12, dadurch gekennzeichnet, daß die im montierten Zustand des Greifteiles (6) in Umfangsrichtung (3) ausgerichteten schmalseitigen Randbereiche (15, 15'), bei Einnahme der kappen- oder haubenförmigen Längsgestalt gesehen, einen gegenüber den längsseitigen Randbereichen (8, 8') zurückgesetzten Verlauf besitzen.

14. Aufsatzteil nach einem der Ansprüche 1 bis 13, dadurch gekennzeichnet, daß die Verbindungseinrichtung (17) ein am einen trennstellenseitigen Randbereich (8') des Greifteiles (6) angeordnetes Verbindungsteil (18) aufweist, das mit dem gegenüberliegenden zweiten Randbereich des Greifteiles (6) oder einem daran angeordneten weiteren Verbindungsteil (19) der Verbindungseinrichtung (17) verbindend zusammenarbeiten kann.

15. Aufsatzteil nach einem der Ansprüche 1 bis 14, dadurch gekennzeichnet, daß als Verbindungseinrichtung (17) eine Druckknopf-, Reißverschluß- oder Selbstklebeverbindungseinrichtung oder eine sogenannte Klettverbindungseinrichtung vorgesehen ist.

16. Aufsatzteil nach einem der Ansprüche 1 bis 15, dadurch gekennzeichnet, daß die Montagetrennstelle (7) im am Lenkradkranz (4) angebrachten Zustand zumindestens über einen Teil ihrer Länge zumindest im wesentlichen oder annähernd geschlossen ist, zweckmäßigerweise indem die die Montagetrennstelle (7) längsseits begrenzenden Randbereiche (8, 8') des Greifteiles (6) aneinander anliegen oder in unmittelbarer Nähe zueinander zu liegen kommen.

17. Aufsatzteil nach einem der Ansprüche 1 bis 16, dadurch gekennzeichnet, daß im Bereich eines der beiden trennstellenseitigen Randbereiche (8, 8') des Greifteiles (6) eine am Lenkradkranz (4) haftend festlegbare Halteeinrichtung (20) als Montagehilfe vorgesehen ist.

18. Aufsatzteil nach einem der Ansprüche 1 bis 17, dadurch gekennzeichnet, daß an der im montierten Zustand der Außenoberfläche des Lenkradkranzes zugewandten Greifteil-Innenseite (10) Mittel (21) zur Verhinderung eines Verrutschens des Greifteiles (6) gegenüber dem Lenkradkranz (4) vorgesehen sind.

19. Aufsatzteil nach einem der Ansprüche 1 bis 18, dadurch gekennzeichnet, daß das Greifteil (6) einen Mehrschichtaufbau (21, 24) aufweist, wobei die vorhandenen Materialschichten insbesondere unterschiedliche Materialeigenschaften aufweisen, die vorzugsweise jeweils einem besonderen Zweck dienen, z.B. der Isolierung, Aufpolsterung, Schweißaufnahme und/oder Rutschhemmung.

## Claims

1. Attachment for detachably fitting to the rim (4) of a ready-made vehicle steering wheel (1) gripped by the hand of the driver, whereby the attachment at least partially encompasses the steering wheel rim (4) in the direction of gripping (5) in its fitted state and is formed by a sleeve-like gripping element (6) of a length corresponding to at least the width of a hand and provided with a disconnecting point (7) permitting it to be attached to the steering wheel rim (4), said gripping element extending only over part of the circumference of the steering wheel rim (4) in the fitted state and being capable of being fitted to any point of the rim circumference (3) to be gripped with one hand, being provided with a connecting element (17) designed for detachable retention in the area of the disconnecting point (7), characterized in that the gripping element (6) has a cap- or hood-like shape determined by preforming in the unmounted state prior to fitting to the steering wheel rim (4) and borders a trough-shaped interior space (9) which the steering wheel rim (3) enters in the fitted state, the area of the cap or hood opening (14) forming the disconnecting point (7).

2. Attachment according to Claim 1, characterized in that the gripping element (6) is originally a flat body of a substantially oblong oval shape, its edge areas (8, 8', 15, 15') being subjected to a shaping operation to produce the hood- or cap-like shape existing before fitting.

3. Attachment according to Claim 2, characterized in that the shaping operation producing the hood- or cap-like shape is performed along the edge.

4. Attachment according to Claim 2 or 3, characterized in that the shaping operation producing the hood- or cap-like shape involves a border tape (22) overlapping the edge areas (8, 8', 15, 15') and fixed thereto.

5. Attachment according to Claim 4, characterized in that the border tape (22) has a U-shaped cross-section, the edge areas (8, 8', 15, 15') being held in the U-recess and thus overlapped on the inside and on the outside.

6. Attachment according to Claim 4 or 5, characterized in that the border tape (22) is sewn to the edge areas (8, 8', 15, 15')

7. Attachment according to any of Claims 4 to 6, characterized in that the length of the border tape (22) is shorter than the original circumference of the flat body.

8. Attachment according to Claim 2, characterized in that the shaping operation producing the hood- or cap-like shape involves the stitching of the edge areas (8, 8', 15, 15').

9. Attachment according to Claim 1, characterized in that the gripping element (6) consists of a dimensionally stable but pliable or flexible material.

10. Attachment according to Claim 1 or 9, characterized in that the gripping element (6) is a preformed plastic body.

11. Attachment according to Claim 10, characterized in that the plastic body is covered by an absorbent and/or insulating material layer.

12. Attachment according to any of Claims 1 to 11, characterized in that the gripping element (6) has a curvature matching the diameter of the steering wheel rim (4) in the fitted state.

13. Attachment according to any of Claims 1 to 12, characterized in that the narrow edge areas (15, 15') aligned in the circumferential direction (3) in the fitted state of the gripping element (6) are reset relative to the longitudinal edge areas (8, 8') when adopting the cap- or hood-like shape.

14. Attachment according to any of Claims 1 to 13, characterized in that the connecting element (17) is provided with a connecting section 18 located in the edge area (8') of the gripping element (6) where the disconnecting point is provided and capable of acting in conjunction with the opposite second edge area of the gripping element (6) or with a second connecting section 19 of the connecting element (17) to provide a connection.

15. Attachment according to any of Claims 1 to 14, characterized in that the connecting element (17) is a press-stud, zip or self-adhesive fastener or a so-called Velcro fastener.

16. Attachment according to any of Claims 1 to 15, characterized in that the disconnecting point (7) is at least substantially or approximately closed over at least part of its length when fitted to the steering wheel rim (4), which is usefully achieved by having the edge areas (8, 8') of the gripping element (6) which longitudinally border the disconnecting point (7) lie next or close to each other.

17. Attachment according to any of Claims 1 to 16, characterized in that a retention element (20) which can be fixed to the steering wheel rim (4) by means of adhesive is provided as a fitting aid in the area of either of the edge areas (8, 8') associated with the disconnecting point.

18. Attachment according to any of Claims 1 to 17, characterized in that means (21) to prevent the slippage of the gripping element (6) relative to the steering wheel rim (4) are provided on that inner side (10) of the gripping element which faces the outer surface of the steering wheel rim in the fitted state.

19. Attachment according to any of Claims 1 to 18, characterized in that the gripping element (6) is constructed in multiple layers (21, 24), the material layers having different material properties, each preferably serving a specific purpose, such as insulation, cushioning, sweat absorption and/or anti-slip action.

## Revendications

1. Garniture devant être apposée de manière amovible sur la couronne de volant (4), saisie entièrement par la main du conducteur, d'un volant de véhicule (1) prêt à l'emploi, la garniture entourant la couronne de volant (4), une fois apposée sur celui-ci, au moins partiellement dans la direction de préhension (5) et étant constituée d'une partie de préhension (6) longue d'au moins environ la largeur de la main, munie d'une séparation de montage (7) permettant l'installation sur la couronne de volant (4), qui ne s'étend que sur une partie de la circonférence de la couronne une fois apposée sur la couronne de volant (4) et peut être apposée en un endroit quelconque de la circonférence de la couronne (3) de manière à pouvoir être saisie d'une main, ce pour quoi elle présente au niveau de la séparation de montage (7) un dispositif de liaison (17) servant au maintien amovible, caractérisée en ce que la partie de préhension (6), à l'état non monté avant la pose sur la couronne de volant (4), présente une forme de type bonnet ou capuche déterminée par pré-formage et délimite un volume intérieur (9) en forme de cavité, dans lequel la couronne de volant (3) se loge dans l'état monté sur celui-ci, la zone de l'ouverture de bonnet ou de capuchon (14) formant la séparation de montage (7).

2. Garniture selon la revendication 1, caractérisée en ce que la partie de préhension (6) est constituée d'un corps plat présentant à l'origine, pour l'essentiel, un contour oblong, dont les zones de bord (8, 8', 15, 15') ont connu une mesure de transformation conduisant à la forme en bonnet ou capuchon présente avant le montage.

3. Garniture selon la revendication 2, caractérisée en ce que la mesure de traitement conduisant à la forme en bonnet ou capuchon est une mesure de transformation s'étendant sur les bords.

4. Garniture selon la revendication 2 ou 3, caractérisée en ce que, comme mesure de traitement conduisant à la forme en bonnet ou capuchon, il est prévu une bande de bordure (22) recouvrant les zones de bord (8, 8', 15, 15') et liée fermement à celles-ci.

5. Garniture selon la revendication 4, caractérisée en ce que la bande de bordure (22) possède une forme en U, en section transversale, les zones de bord (8, 8', 15, 15') se logeant dans la cavité en U et étant ainsi recouvertes à l'intérieur et à l'extérieur.

6. Garniture selon la revendication 4 ou 5, caractérisée en ce que la bande de bordure (22) est cousue avec les zones de bord (8, 8', 15, 15').

7. Garniture selon l'une des revendications 4 à 6, caractérisée en ce que la longueur de la bande de bordure (22) est plus faible que la circonférence de bord originelle du corps plat.

8. Garniture selon la revendication 2, caractérisée en ce que, comme mesure de traitement conduisant à la forme en bonnet ou capuchon, il est prévu une couture des zones de bord (8, 8', 15, 15').

9. Garniture selon la revendication 1, caractérisée en ce que la partie de préhension (6) est constituée d'un matériau de forme stable, mais toutefois souple ou flexible.

10. Garniture selon l'une des revendications 1 à 9, caractérisée en ce que la partie de préhension (6) est constituée d'un corps en plastique pré-moulé.

11. Garniture selon la revendication 10, caractérisée en ce que le corps en plastique est recouvert d'une couche de matière absorbante et/ou isolante.

12. Garniture selon l'une des revendications 1 à 11, caractérisée en ce que la partie de préhension (6) présente, à l'état monté, une courbure adaptée au diamètre de la couronne de volant (4).

13. Garniture selon l'une des revendications 1 à 12, caractérisée en ce que les zones de bord étroites (15, 15') orientées dans la direction de la circonférence, à l'état monté de la partie de préhension (6), une fois prise la forme en bonnet ou en capuchon, possèdent un contour en retrait par rapport aux zones de bord longitudinales (8, 8').

14. Garniture selon l'une des revendications 1 à 13, caractérisée en ce que le dispositif de liaison (17) présente une partie de liaison (18) placée sur un bord (8') du côté de la séparation de la partie de préhension (6), qui peut coopérer en liaison avec la deuxième zone de bord opposée de la partie de préhension (6) ou avec une autre partie de liaison (19), placée sur celle-ci, du dispositif de liaison (17).

15. Garniture selon l'une des revendications 1 à 14, caractérisée en ce que, comme dispositif de liaison (17), il est prévu un dispositif de liaison par bouton-pression, par fermeture à glissière, par autocollant, ou ce qu'on appelle un dispositif à bande agrippante.

16. Garniture selon l'une des revendications 1 à 15, caractérisée en ce que la séparation de montage (7), dans l'état apposé sur la couronne de volant (4), au moins sur une partie de sa longueur, est fermée au moins pour l'essentiel ou approximativement, de façon opportune, en ce que les zones de bord (8, 8') de la partie de préhension (6) délimitant en longueur la séparation de montage (7) sont situés l'un contre l'autre ou viennent se placer à proximité immédiate l'une de l'autre.

17. Garniture selon l'une des revendications 1 à 16, caractérisée en ce que, au niveau de l'une des deux zones de bord (8, 8'), côté séparation de la partie de préhension (6), il est prévu, comme aide au montage, un dispositif d'arrêt (20) se plaçant par adhérence sur la couronne de volant (4).

18. Garniture selon l'une des revendications 1 à 17, caractérisée en ce que, sur la face intérieure (10) de la partie de préhension, tournée à l'état monté vers la surface extérieure de la couronne de volant, des moyens (21) sont prévus pour éviter un glissement de la partie de préhension (6) par rapport à la couronne de volant (4).

19. Garniture selon l'une des revendications 1 à 18, caractérisée en ce que la partie de préhension (6) présente une construction multicouches (21, 24), les couches de matière présentes présentant en particulier différentes propriétés de matériaux, qui servent de préférence chacune à un but particulier, par exemple à l'isolation, au rembourrage, à l'absorption de la sueur et/ou à empêcher le glissement.
